Europäisches Patentamt

European Patent Office

Office européen des brevets

(11) Publication number: **0 470 250 A1**

# EUROPEAN PATENT APPLICATION
## published in accordance with Art. 158(3) EPC

(21) Application number: 90903433.2

(22) Date of filing: 26.02.90

(86) International application number:
PCT/JP90/00227

(87) International publication number:
WO 91/13447 (05.09.91 91/21)

(51) Int. Cl.5: **H01C 7/00, G01N 27/12**

(43) Date of publication of application:
**12.02.92 Bulletin 92/07**

(84) Designated Contracting States:
**BE DE FR GB IT LU NL**

(71) Applicant: **SHINAGAWA REFRACTORIES CO., LTD.**
**2-1, Ohtemachi 2-chome Chiyoda-ku Tokyo 100(JP)**

(72) Inventor: **KUROSHIMA, Hiroshi**
**3-18-40, Saidaiji-Naka**
**Okayama-shi, Okayama 704(JP)**
Inventor: **NAKAYAMA, Susumu**
**390, Higashi-Katakami**
**Bizen-shi, Okayama 705(JP)**

(74) Representative: **Diamond, Bryan Clive et al**
**Gee & Co., Chancery House, Chancery Lane**
**London WC2A 1OU(GB)**

(54) **MOISTURE SENSOR.**

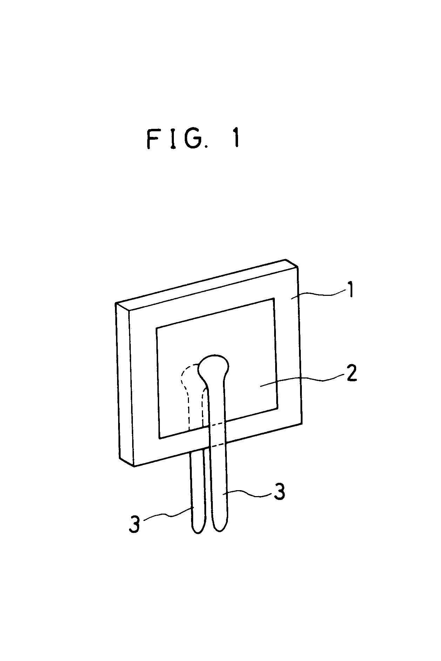

(57) A calcined or sintered material having a basic composition $(Pb_{1-x}La_x)(Zr_yTi_{1-y})_{1-x/4}O_3$ (wherein $O < x < 0.25$, $O < y < 1$) is pulverized and is used as a raw material for a support member of the moisture sensor. A plate made of this material having a thickness of 0.5 mm and a size of 6 x 6 mm is sintered at 800 to 1100 °C for several hours in the open air to obtain the support member. The support member is immersed in an aqueous solution of alkali metal phosphate of 0.05 mol/l or higher for several seconds, dried, and heat-treated at 600 °C to 900 °C for several hours in the open air so that the entire porous surface is covered with an alkali metal phosphate. As shown in Fig. 1, golden opposing electrodes (2) are formed on both surfaces of the moisture-sensing member (1) by vacuum deposition, and lead wires (3) are attached to the electrodes using an electrically conductive resin adhesive to obtain a moisture sensor of the sandwich structure. The sensor is left to stand several days under high-temperature and high-humidity conditions (60 to 90 °C, 80 to 95 % RH). At a temperature of 30 °C, the sensor exhibits an impedance of 1 M$\Omega$ when the relative humidity is 0 % and 3 M$\Omega$ when the relative humidity is 90 %, which is a region suited for assembling a measuring circuit, and further exhibits very little aging and very small temperature coefficient.

# FIG. 1

Technical Field

The present invention relates to a humidity-sensing element which is produced by covering the entire surface of a porous sintered material made from a ferroelectric metal oxide (Pb, La)(Zr, Ti)$O_3$ with an alkali metal phosphate and allowing the resulting product to stand for a predetermined period of time under high temperature and humidity conditions to realize long-term stability in characteristics.

Background Art

In general, humidity-sensing elements whose impedance changes with the amount of water vapor in the atmosphere (i.e., humidity) are produced using porous materials of metal oxides, e.g., $A\ell_2O_3$, $ZrSiO_4$, $MgA\ell_2O_4$, $MgCr_2O_4$, etc., electrolytic salts, e.g., a $LiC\ell$ saturated solution, or cellulose, hydrophilic polymers, etc.

However, most of humidity-sensing elements that employ metal oxides are insulators and hence suffer from the problem that the impedance thereof in the low-humidity region is high, i.e., $10^8$ ohm-cm or more, and it is therefore difficult to effect measurement with a general-purpose measuring device, although these humidity-sensing elements are superior in chemical and physical stabilities. Further, electrolytic salts, cellulose and hydrophilic polymers are lacking in chemical resistance and heat resistance. In addition, with regard to all the above-described humidity-sensing elements, satisfactory characteristics have not always been obtained in terms of the impedance characteristics over the entire humidity range and the long-term stability of the elements.

As one type of humidity-sensing element that can solve the above-described problems, there is a humidity-sensing element which is produced by adding an alkali metal phosphate to (Pb, La)(Zr, Ti)$O_3$ (see Japanese Patent Application Laid-Open (KOKAI) No. 63-44701). However, this humidity-sensing element is inferior in strength and gives rise to a problem in mass-production. This humidity-sensing element further has a little problem in terms of the long-term stability in characteristics, although it is not so serious as in the conventional humidity-sensing elements.

Disclosure of the Invention

Accordingly, the humidity-sensing element of the present invention is characterized in that a porous sintered material made from a ferroelectric metal oxide having a basic composition which is given by

$(Pb_{1-x}La_x)(Zr_yTi_{1-y})_{1-x/4}O_3$
$0 < x \leqq 0.25, 0 < y < 1$

is employed as a substrate, and the entire surface of the substrate is covered with an alkali metal phosphate, and then the resulting product is allowed to stand for a predetermined period of time under high temperature and humidity conditions to realize long-term stability in characteristics.

A calcined or sintered material made from a ferroelectric metal oxide having the above-described composition is ground, and the resulting power is used as a substrate material for a humidity-sensing element. More specifically, the substrate material is molded into a sheet with a size of 6 x 6 mm and a thickness of 0.5 mm and then sintered in the atmosphere for a several hours at 800 to 1100°C to form a substrate. The resulting substrate is dipped for several seconds in an aqueous solution of 0.05 mol/$\ell$ or more of an alkali metal phosphate, and after drying, the substrate is heat-treated in the atmosphere for several hours at 600°C to 900°C, thereby covering the entire surface of the porous substrate with an alkali metal phosphate. As shown in Fig. 1, gold opposing electrodes 2 are formed on both surfaces, respectively, of a humidity-sensing member 1 by vacuum deposition, and a lead wire 3 is attached to each electrode by use of an electrically conductive resin adhesive to form a humidity-sensing element with a sandwich structure. Further, the resulting element is allowed to stand for several days under high temperature and humidity conditions (60 to 90°C, 80 to 95%RH). The humidity-sensing element exhibits an impedance of 1 M$\Omega$ when the relative humidity is 0% at 30°C and an impedance of 3 K$\Omega$ when the relative humidity is 90% at 30°C. Thus, the impedance changes in a range where a general measuring circuit can be readily combined with the humidity-sensing element. In addition, the humidity-sensing element has substantially no change with time and a small temperature coefficient.

Brief Description of the Drawings

Fig. 1 shows the arrangement of a humidity-sensing element;

Fig. 2 shows impedance-to-humidity characteristics for various kinds of aqueous phosphoric acid solution;

Fig. 3 shows impedance-to-humidity characteristics for various concentrations of $KH_2PO_4$ solution;

Fig. 4 shows impedance-to-humidity characteristics for various heat treatment temperatures; and

Fig. 5 shows impedance-to-humidity characteristics for various burning temperatures.

Best Mode for Carrying Out the Invention Examples will be explained below with reference to the drawings.

(Example 1)

In the basic composition of $(Pb_{1-x}La_x)(Zr_yTi_{1-y})_{1-x/4}O_3$, when x and y are within the respective ranges of $0<x\leqq0.25$ and $0<y<1$, a single phase of PLZT is obtained and higher ferroelectricity is exhibited. Within these composition ranges, the composition of $(Pb_{0.91}La_{0.09})(Zr_{0.65}Ti_{0.35})_{1-0.09/4}O_3$ provides a high specific dielectric constant of about 4500 when formed into a sintered product. A humidity-sensing element was prepared by the following process using a material whose composition is $(Pb_{0.91}La_{0.09})(Zr_{0.65}Ti_{0.35})_{1-0.09/4}O_3$ as a substrate material for a humidity-sensing member.

First, 0.97 mole of lead oxide, 0.045 of lanthanum oxide, 0.65 mole of zirconium oxide and 0.35 mole of titanium oxide were mixed together and then ground and kneaded in an oscillating mill. After drying, a calcining process was carried out to obtain a calcined material powder for a humidity-sensing member. Further, the resulting calcined material powder was compression-molded at 1000 $Kg/cm^2$ and then sintered at 1150°C for 20 to 40 hours in an atmosphere of $O_2$ and PbO. The resulting sintered product was ground by use of a grinder to obtain a sintered material powder. The calcined or sintered material powder thus obtained was used as a substrate material for a humidity-sensing member and molded into a sheet with a size of 6 x 6 mm and a width of 0.5 mm at a pressure of 500 $kg/cm^2$ by use of a compressor. The resulting product was then burned for 2 hours at 1000°C to form a substrate for a humidity-sensing member. The substrate was dipped for several seconds in each aqueous solution of 0.367 mol/$\ell$ of an alkali metal phosphate shown in Table 1, and after drying, it was heat-treated for 2 hours at 700°C to obtain a humidity-sensing member.

Table 1

| No. | Kinds of aqueous solution |
|---|---|
| 1 | $LiH_2PO_4$ |
| 2 | $NaH_2PO_4 \cdot 2H_2O$ |
| 3 | $KH_2PO_4$ |

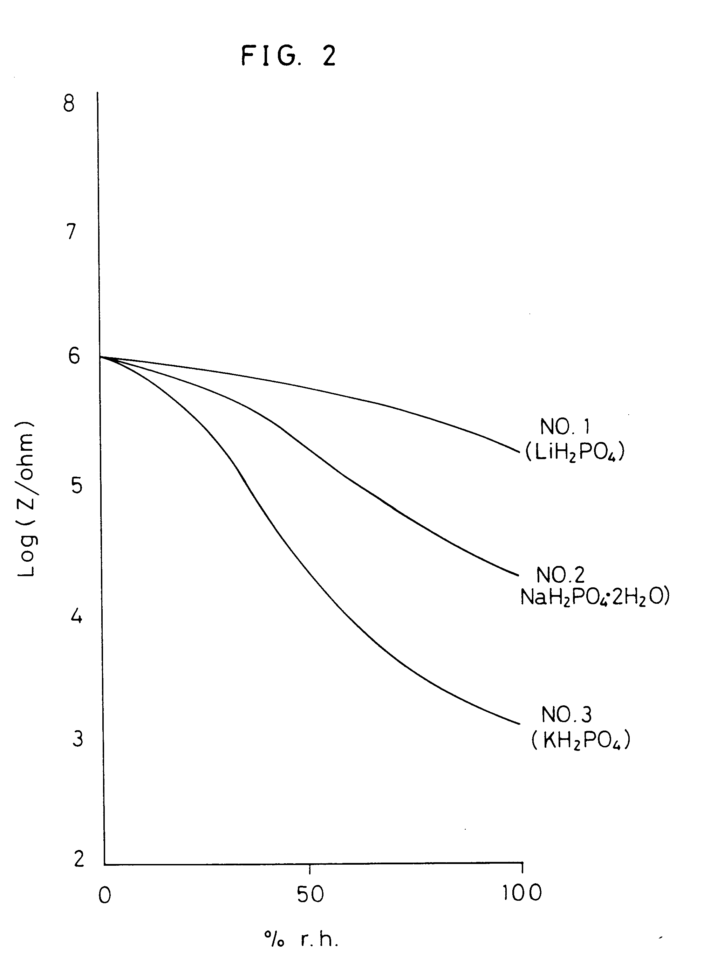

Gold opposing electrodes were formed on both surfaces, respectively, of each of the humidity-sensing members thus obtained by vacuum deposition, and lead wires were attached thereto to form a humidity-sensing element such as that shown in Fig. 1. Further, the humidity-sensing elements were allowed to stand (aging) for several days under high temperature and humidity conditions of 60°C and 95%RH in order to stabilize the characteristics. Thereafter, impedance changes (humidity-sensing characteristics) with respect to changes in humidity were measured at 30°C and 1kHz. Fig. 2 shows the results of the measurement. Nos. 1 to 3 all provide impedance changes which are substantially linear with respect to humidity. In particular, $KH_2PO_4$ (No. 3) provides large changes and makes it possible to form a humidity-sensing element of high sensitivity. (Example 2)

Substrates of the same composition which were obtained according to Example 1 were dipped for several seconds in respective aqueous $KH_2PO_4$ solutions of various concentrations shown in Table 2. After drying, the substrates were processed according to Example 1 to produce humidity-sensing elements, which were then subjected to aging.

Table 2

| No. | Concentration of aqueous KH$_2$PO$_4$ solution (mol/ℓ) |
|---|---|
| 4 | 0.073 |
| 5 | 0.220 |
| 6 | 0.367 |
| 7 | 0.514 |

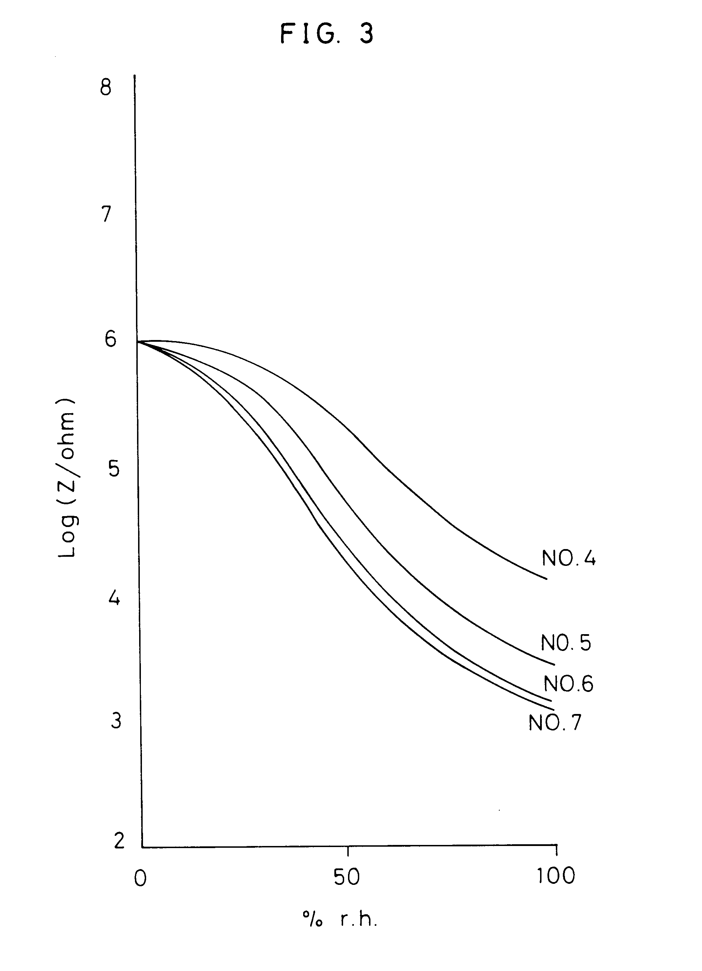

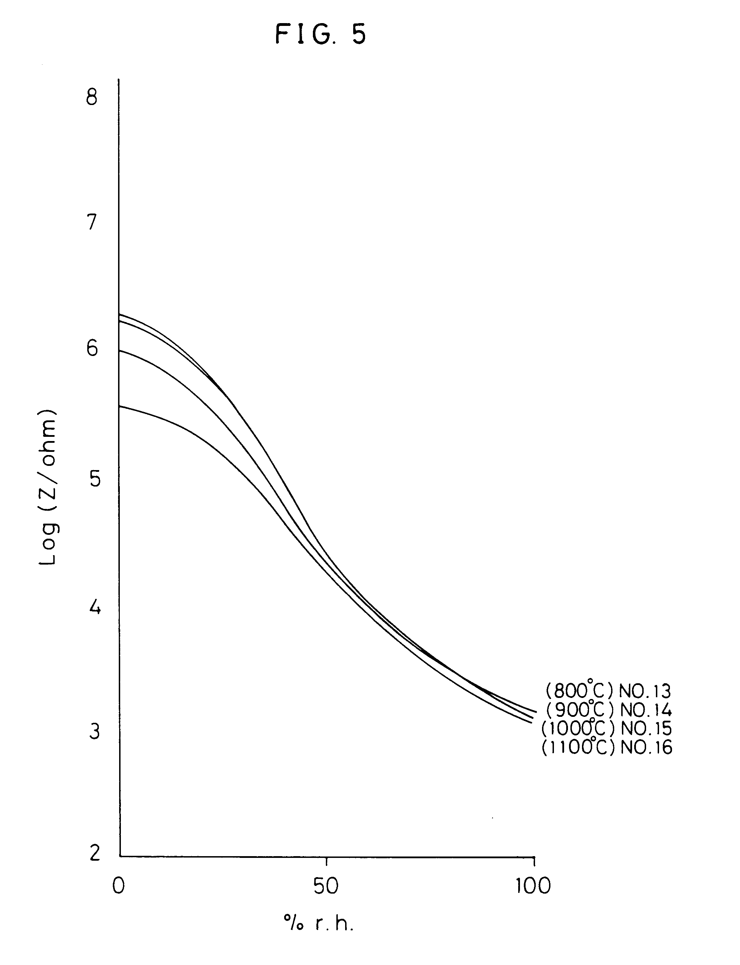

Fig. 3 shows the humidity-sensing characteristics of the humidity-sensing elements thus obtained. The measuring conditions were the same as in Example 1. The reason why the highest concentration of the aqueous KH$_2$PO$_4$ solution is 0.514 mol/ℓ is that KH$_2$PO$_4$ is difficult to dissolve at a concentration above it. As will be understood from Fig. 5, the higher the KH$_2$PO$_4$ concentration, the greater the change in impedance relative to the change in humidity. (Example 3)

Substrates of the same composition which were obtained according to Example 1 were dipped for several seconds in an aqueous solution of 0.367 mol/ℓ of KH$_2$PO$_4$, and after drying, these substrates were heat-treated for 2 hours at various temperatures shown in Table 3.

Table 3

| No. | Heat-treatment temperature (°C) |
|---|---|
| 8 | 600 |
| 9 | 700 |
| 10 | 800 |
| 11 | 900 |
| 12 | 1000 |

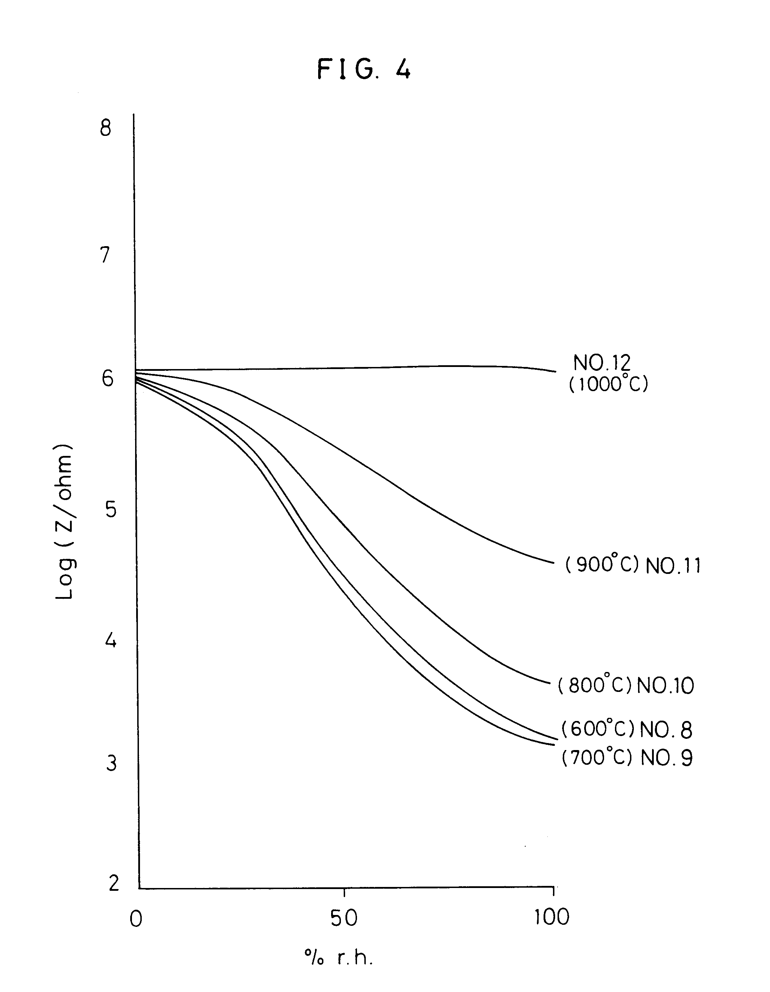

Each humidity-sensing member thus obtained was formed into a humidity-sensing element according to Example 1, which was then subjected to aging. Fig. 4 shows the characteristics of each humidity-sensing element. The measuring conditions were the same as in Example 1. As will be understood from Fig. 4, when the heat treatment was effected at a high temperature of about 1000°C, it was impossible to obtain a large impedance change relative to the change in humidity. Accordingly, it is necessary to carry out the heat treatment at a temperature lower than 1000°C, preferably in the range of from 600 to 900°C.

(Example 4)

Substrate materials of the same composition which were obtained according to Example 1 were processed to molded products with a size of 6 x 6 mm and a thickness of 0.5 mm by the same molding process as in Example 1. Thereafter, the resulting molded products were burned for 2 hours at various temperatures shown in Table 4.

Table 4

| No. | Burning temperature (°C) |
|---|---|
| 13 | 800 |
| 14 | 900 |
| 15 | 1000 |
| 16 | 1100 |

The substrates thus obtained were dipped for several seconds in an aqueous solution of 0.367 mol/$\ell$ of $KH_2PO_4$. After drying, the substrates were formed into humidity-sensing elements according to Example 1, which were then subjected to aging. Fig. 5 shows the characteristics of the resulting humidity-sensing elements, which were measured under the same conditions as in Example 1. If the burning temperature exceeds 1100°C, no porous substrate can be obtained. If the burning temperature is lower than 800°C, it is impossible to obtain a strength adequate for mass-production. It is therefore necessary to effect burning in the temperature range of from 800 to 1100°C.

(Example 5)

(Pb, La)(Zr, Ti)$O_3$ materials of various composition ratios shown in Table 5 were prepared according to the process of Example 1 to obtain substrate materials for humidity-sensing members. Subsequently, with these materials, humidity-sensing elements were made according to the process of Example 1 using $KH_2PO_4$ as an alkali metal phosphate. Table 5 shows the impedance values of each humidity-sensing element at relative humidities of 0, 50 and 90%RH. The measuring temperature was 30°C and the measuring frequency was 1 kHz.

Table 5

| $(Pb_{1-x}La_x)$ $(Zr\ Ti_{1-y})_{1-x/4}O_3$ | | Impedance value (ohm) | | |
|---|---|---|---|---|
| x | y | 0%RH | 50%RH | 90%RH |
| 0.09 | 0.65 | $1.0 \times 10^6$ | $2.1 \times 10^4$ | $1.7 \times 10^3$ |
| 0.01 | 0.65 | $9.8 \times 10^5$ | $1.0 \times 10^4$ | $9.2 \times 10^2$ |
| 0.03 | 0.90 | $1.4 \times 10^6$ | $6.3 \times 10^4$ | $1.5 \times 10^3$ |
| 0.15 | 0.40 | $9.6 \times 10^5$ | $3.5 \times 10^4$ | $1.2 \times 10^3$ |
| 0.20 | 0.65 | $9.4 \times 10^5$ | $2.7 \times 10^4$ | $9.7 \times 10^2$ |
| 0.23 | 0.65 | $8.2 \times 10^6$ | $1.8 \times 10^4$ | $9.8 \times 10^2$ |

It will be clear from Table 5 that considerably large impedance changes can be obtained and that the impedance values in the low-humidity region can be lowered. It should be noted that, if x exceeds 0.25, the dielectric constant of the substrate lowers and the impedance value in the low-humidity region becomes high, so that it becomes difficult to effect measurement with a general-purpose impedance meter.

(Example 6)

Two humidity-sensing elements were obtained by executing the process of Example 1 up to the step just before the aging step using $(Pb_{1-x}La_x)(Zr_yT_{1-y})_{1-x/4}O_3$ wherein $x = 0.09$ and $y = 0.65$, and $KH_2PO_4$ as an alkali metal phosphate. One of the two humidity-sensing elements was subjected to the aging process, while the other was not aged. Table 6 shows changes with time of these two elements. It should be noted that these elemets were stored in touch with the atmosphere in a laboratory.

### Table 6

| | Relative humidity | Impedance value (ohm) | | |
|---|---|---|---|---|
| | | Beginning | 1 year after | 2 years after |
| Aged product | 0%RH | $1.2 \times 10^6$ | $1.2 \times 10^6$ | $1.2 \times 10^6$ |
| | 20%RH | $4.0 \times 10^5$ | $4.1 \times 10^5$ | $4.2 \times 10^5$ |
| | 50%RH | $2.3 \times 10^4$ | $2.8 \times 10^4$ | $2.2 \times 10^4$ |
| | 90%RH | $1.8 \times 10^3$ | $1.5 \times 10^3$ | $1.7 \times 10^3$ |
| Unaged product | 0%RH | $1.1 \times 10^6$ | $1.3 \times 10^6$ | $1.2 \times 10^6$ |
| | 20%RH | $7.3 \times 10^5$ | $5.0 \times 10^5$ | $4.7 \times 10^5$ |
| | 50%RH | $5.2 \times 10^4$ | $3.0 \times 10^4$ | $2.8 \times 10^4$ |
| | 90%RH | $8.2 \times 10^3$ | $2.1 \times 10^3$ | $1.8 \times 10^3$ |

As will be understood from Table 6, the aged product showed substantially no change in the characteristics for 2 years, and it is therefore preferable to carry out the aging process. The unaged product showed considerable changes in the characteristics during the first year, but no large changes during the second year.

Industrial Applicability

Thus, it is possible according to the present invention to obtain a humidity-sensing element wherein the impedance values in the low-humidity region are low and the changes in impedance over the entire humidity range occur in a range where a simple measuring circuit can be readily combined with the humidity-sensing element, and which has substantially no change with time and a small temperature coefficient.

**Claims**

1. A humidity-sensing element which is characterized in that the entire surface of a substrate is covered with an alkali metal phosphate, said substrate comprising a porous sintered material made from a ferroelectric metal oxide having a basic composition which is given by

   $(Pb_{1-x}La_x)(Zr_yTi_{1-y})_{1-x/4}O_3$
   $0 < x \leqq 0.25, 0 < y < 1$

2. A humidity-sensing element according to Claim 1, wherein said alkali metal phosphates are $KH_2PO_4$, $NaH_2PO_4 \cdot 2H_2O$ and $LiH_2PO_4$ etc..

3. A humidity-sensing element according to Claim 1, wherein said substrate covered with an alkali metal phosphate is heat-treated at 600 to 900°C.

4. A humidity-sensing element according to Claim 1, wherein said substrate is burned at 800 to 1100ºC.

FIG. 1

# FIG. 2

# FIG. 3

# FIG. 4

NO.12
(1000°C)

(900°C) NO.11

(800°C) NO.10

(600°C) NO. 8
(700°C) NO. 9

Log (Z/ohm)

% r.h.

# FIG. 5

(800°C) NO.13
(900°C) NO.14
(1000°C) NO.15
(1100°C) NO.16

# INTERNATIONAL SEARCH REPORT

International Application No PCT/JP90/00227

## I. CLASSIFICATION OF SUBJECT MATTER (if several classification symbols apply, indicate all) 6

According to International Patent Classification (IPC) or to both National Classification and IPC

Int. Cl⁵     H01C7/00, G01N27/12

## II. FIELDS SEARCHED

### Minimum Documentation Searched 7

| Classification System | Classification Symbols |
|---|---|
| IPC | H01C7/00, G01N27/12 |

### Documentation Searched other than Minimum Documentation to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No. 13 |
|---|---|---|
| A | JP, A, 63-44701 (Shinagawa Refractories Co., Ltd.), 25 February 1988 (25. 02. 88), (Family: none) | 1 - 4 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| April 5, 1990 (05. 04. 90) | April 23, 1990 (23. 04. 90) |
| International Searching Authority | Signature of Authorized Officer |
| Japanese Patent Office | |

Form PCT/ISA/210 (second sheet) (January 1985)